(19) Europäisches Patentamt
European Patent Office
Office européen des brevets

(11) **EP 4 579 925 A1**

(12) # EUROPEAN PATENT APPLICATION

(43) Date of publication:
**02.07.2025 Bulletin 2025/27**

(21) Application number: **24218538.7**

(22) Date of filing: **10.12.2024**

(51) International Patent Classification (IPC):
*H01M 50/509* (2021.01)     *H01M 50/545* (2021.01)
*H01M 50/559* (2021.01)

(52) Cooperative Patent Classification (CPC):
**H01M 50/503; H01M 50/213; H01M 50/509;
H01M 50/51; H01M 50/545; H01M 50/559;**
H01M 50/514; H01M 50/519

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 31.12.2023 CN 202311874131
31.12.2023 CN 202323671303 U
17.05.2024 PCT/CN2024/093795

(71) Applicant: **Eve Energy Co., Ltd.
Huizhou, Guangdong 516006 (CN)**

(72) Inventors:
• **REN, Chaoju
Huizhou, Guangdong, 516006 (CN)**
• **LI, Liangyu
Huizhou, Guangdong, 516006 (CN)**

(74) Representative: **Berggren Oy
P.O. Box 16
Eteläinen Rautatiekatu 10A
00101 Helsinki (FI)**

(54) **CONNECTING UNIT, BUSBAR, AND BATTERY MODULE**

(57)    The present disclosure provides a connecting unit, a busbar (200), and a battery module (300). The connecting unit is configured to connect battery cells (100). The battery cells (100) include at least a first battery cell (11) and a second battery cell (12). The connecting unit includes a first positive connecting part (21) configured to detachably connect a positive terminal (111) of the first battery cell (11) and electrically connected to the positive terminal (111) of the first battery cell (11); and a first negative connecting part (31) configured to detachably connect a negative terminal (133) of the second battery cell (13) and electrically connected to the negative terminal (133) of the second battery cell (13). The first negative connecting part (31) is connected to the first positive connecting part (21).

**Description**

TECHNICAL FIELD

The present disclosure relates to the technical field of batteries, and in particular, to a connecting unit, a busbar, and a battery module.

BACKGROUND

A power battery generally includes a plurality of battery cells, and a busbar is required to achieve electrical connection between the battery cells. In order to realize electrical connection between the busbar and a pole of the battery cell, the busbar and the battery cell are generally welded. For example, the busbar and the pole of the battery cell are welded.

However, the welding process is complicated and inefficient, and during the welding process of the busbar and the pole of the battery cell, it is easy to cause poor welding between the busbar and the battery cell, affecting the yield rate.

SUMMARY

Embodiments of the present disclosure provide a connecting unit, a busbar, and a battery module. In the connecting unit, the busbar, and the battery module, a detachable connection between the connecting unit and the battery cell is realized. Compared with a traditional way of welding the busbar and a pole the battery cell, in the present disclosure, the connecting process is simplified, and production efficiency and yield are improved.

In a first aspect, the present disclosure provides a connecting unit configured to connect battery cells. The battery cells include at least a first battery cell and a second battery cell. The connecting unit includes: a first positive connecting part configured to detachably connect a positive terminal of the first battery cell and electrically connected to the positive terminal of the first battery cell; and a first negative connecting part configured to detachably connect a negative terminal of the second battery cell and electrically connected to the negative terminal of the second battery cell. The first negative connecting part is connected to the first positive connecting part to connect the first battery cell and the second battery cell in series.

In a second aspect, the present disclosure provides a busbar, including the above-mentioned connecting unit. The first positive connecting part and the first negative connecting part in each connecting unit are arranged along the first direction, and a plurality of connecting units are arranged along the first direction. Two adjacent connecting units arranged along the first direction are defined as a first connecting unit and a second connecting unit, respectively. The first negative connecting part of the first connecting unit is sleeved on the negative terminal of the first battery cell, the first positive connecting part of the second connecting unit is sleeved on the positive terminal of the first battery cell, and the first negative connecting part of the second connecting unit is sleeved on the negative terminal of the second battery cell.

In a third aspect, the present disclosure provides a battery module, including a plurality of battery cells and the above-mentioned busbar. The busbar is configured to connect the plurality of battery cells.

Beneficial effects of the embodiments of the present disclosure:

In the connecting unit provided by the present disclosure, by detachably connecting the first positive connecting part and the positive terminal of the first battery cell and by detachably connecting the first negative connecting part and the negative terminal of the second battery cell, the electrical connection between the connecting unit and the battery cells is realized, and detachable connection of the battery cells is realized. Compared with the related arts of welding the busbar and a pole the battery cell, the connection process is simplified and the production efficiency and yield are improved.

The busbar provided by the present disclosure adopts the above-mentioned connecting unit. The first positive connecting part and the first negative connecting part in each connecting unit are arranged along the first direction. The plurality of connecting units are arranged along the first direction. The two adjacent connecting units arranged in the first direction are defined as the first connecting unit and the second connecting unit, respectively. The first negative connecting part of the first connecting unit is sleeved on the negative terminal of the first battery cell. The first first positive connecting part of the second connecting unit is sleeved on the positive terminal of the first battery cell, and the first negative connecting part of the second connecting unit is sleeved on the negative terminal of the second battery cell. Therefore, production efficiency and yield are effectively improved.

The battery module provided by the present disclosure includes the plurality of battery cells, and the above-mentioned busbar. The busbar is configured to connect the plurality of battery cells. Therefore, the production efficiency and yield rate of the battery module are effectively improved.

BRIEF DESCRIPTION OF THE DRAWINGS

In order to more clearly illustrate technical solutions in the embodiments of the present disclosure, the drawings needed to be used in the description of the embodiments will be briefly introduced below. Obviously, the drawings in the following description are only some embodiments of the present disclosure. For those skilled in the art, other drawings may also be obtained based on these drawings without exerting creative efforts.

For a more complete understanding of the present disclosure and its beneficial effects, it is illustrated below in conjunction with the accompanying drawings. Where the same reference symbol in the description below indicates the same part.

FIG. 1 is a schematic structural diagram of a battery module provided by embodiments of the present disclosure.
FIG. 2 is a top view of a structure in FIG. 1.
FIG. 3 is a partial structural schematic diagram of FIG. 1.
FIG. 4 is a top view of a structure in FIG. 3.
FIG. 5 is a schematic structural diagram of a busbar provided by embodiments of the present disclosure.
FIG. 6 is a partial enlarged view of position A in FIG. 5.
FIG. 7 is a partial enlarged view of position B in FIG. 5.
FIG. 8 is a group of experimental data of the connecting unit in one embodiment of the present disclosure.

Explanation of reference symbols:
battery cell 100, first battery cell 11, second battery cell 13, third battery cell 14, positive terminal 111 of first battery cell 11, negative terminal 133 of second battery cell 13, busbar 200, third connecting unit 205, paralleling part 207, battery module 300, positive busbar 303, second positive connecting part 3031, negative busbar 305, second negative connecting part 3051, FPC 302, first positive connecting part 21, first surrounding part 210, first elastic piece 23, first negative connecting part 31, second surrounding part 310, second elastic piece 33, first connecting unit 201, second connecting unit 203, connecting part 51, first end 511, second end 513.

DETAILED DESCRIPTION

In the description of the present disclosure, unless expressly specified and limited otherwise, the terms "link", "connect", "fix" shall be understood broadly. For example, the connection may be a fixed connection, a detachable connection, or an integrated connection. The connection may be a mechanical connection, may also be an electrical connection. The connection may be may be a direct connection, may also be an indirect connection through an intermediate medium. The connection may be a connection within two components or an interaction between the two components. For persons generally skilled in the art, the specific meaning of the above terms in the present disclosure may be understood according to specific situations.

In the present disclosure, unless otherwise expressly specified and limited, a first feature "above" or "below" a second feature may include a direct contact between the first and second features, or may include a contact between the first and second features not directly but through another feature between them. Moreover, the first feature "on", "above", and "over" the second feature includes the first feature directly above and diagonally above the second feature, and a horizontal height of the first feature is greater than a horizontal height of the second feature. The first feature "under" and "below" the second feature includes the first feature directly below and diagonally below the second feature, and the horizontal height of the first feature is less than the horizontal height of the second feature.

In the description of the embodiments, the terms "up", "down", "right", etc. are based on orientations or position relationships illustrated in the attached drawings for the purpose of facilitating description and simplifying operation, and are not intended to indicate or imply that the device or element referred to must have a particular orientation, construction and operation in a particular orientation. Therefore, it cannot be construed as a limitation on the present disclosure. In addition, the terms "first" and "second" are used to delineate and have no special meaning.

In a connection design of a power battery system in the related arts, a busbar is generally used to achieve electrical connection between battery cells, and the busbar usually needs to be welded to a pole of the battery cell. However, during the welding process of the busbar and the pole of the battery cell, welding parameters of each battery cell need to go through repeated verification processes before production. The verification processes consume huge human resources, material resources, equipment resources, and longer time costs, etc. The construction of welding equipment in the production line requires huge capital investment, and most of welding tooling is incompatible and needs to be customized and developed, also consuming a lot of manpower, material resources, and financial resources. In addition, false welds may also occur during the welding process. Since there is currently no accurate welding quality detection method in the industry, false welds cannot be effectively detected. Thus, the battery system is caused to experience long-term driving vibration after it is installed in the vehicle, resulting in safety risks.

A battery module provided by the embodiments of the present disclosure includes battery cells and a busbar. The busbar includes a plurality of connecting units. The connecting units are configured to connect the battery cells. The battery cells include at least first battery cells and second battery cells. The connecting unit includes a first positive connecting part and a first negative connecting part. The first positive connecting part is configured to detachably connect a positive terminal of a first battery cell and is electrically connected to the positive terminal of the first battery cell. The first negative connecting part is configured to detachably connect a negative terminal of a second battery cell and is electrically connected to the negative terminal of the second battery cell. The first negative connecting part is connected to the first positive connecting part to connect the first battery cell and the second battery cell in series.

In the embodiments of the present disclosure, the first positive connecting part and the positive terminal of the first battery cell are detachably connected, and the first negative connecting part and the negative terminal of the second battery cell are detachably connected, thereby realizing detachable connection between the connecting unit and the battery cell, and realizing detachable connection between the battery cell and the battery cell. Compared with related arts, in which the busbar and the pole of the battery cell are welded, in the present disclosure, the connecting process is simplified, and production efficiency and yield are improved.

In some specific implementations, the first positive connecting part may be sleeved on the positive terminal of the first battery cell, and the first negative connecting part may be sleeved on the negative terminal of the second battery cell. By sleeving the first positive connecting part on the positive terminal of the first battery cell and sleeving the first negative connecting part on the negative terminal of the second battery cell, a contact area between the first positive connecting part and the positive terminal of the first battery cell may be increased, and a contact area between the first negative connecting part and the negative terminal of the second battery cell may also be increased, thereby avoiding poor contact and improving production efficiency and yield.

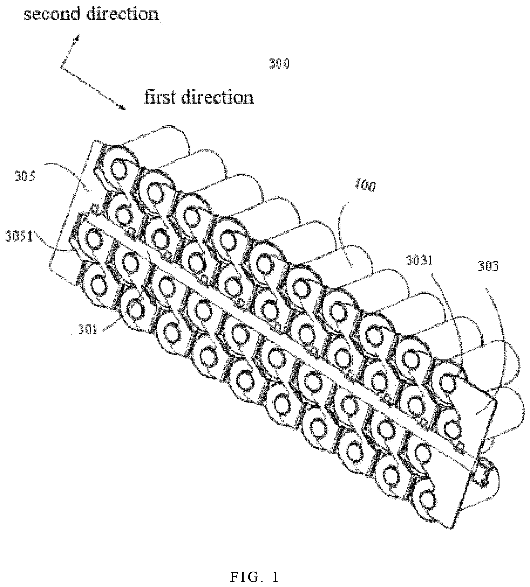

As illustrated in FIG. 1, FIG. 1 is a schematic structural diagram of a battery module 300 provided by embodiments of the present disclosure. The battery module 300 provided in the embodiments of the present disclosure includes battery cells 100 and a busbar 200. The busbar 200 includes a plurality of connecting units. The connecting units are configured to connect the battery cells 100. The battery cells 100 at least include a first battery cell 11 and a second battery cell 13. The connecting unit includes a first positive connecting part 21 and a first negative connecting part 31. The first positive connecting part 21 is configured to connect a positive terminal 111 of the first battery cell 11 and is electrically connected to the positive terminal 111 of the first battery cell 11. The first negative connecting part 31 is configured to connect a negative terminal 133 of the second battery cell 13 and is electrically connected to the negative terminal 133 of the second battery cell 13. The first negative connecting part 31 is connected to the first positive connecting part 21 to connect the first battery cell 11 and the second battery cell 13 in series.

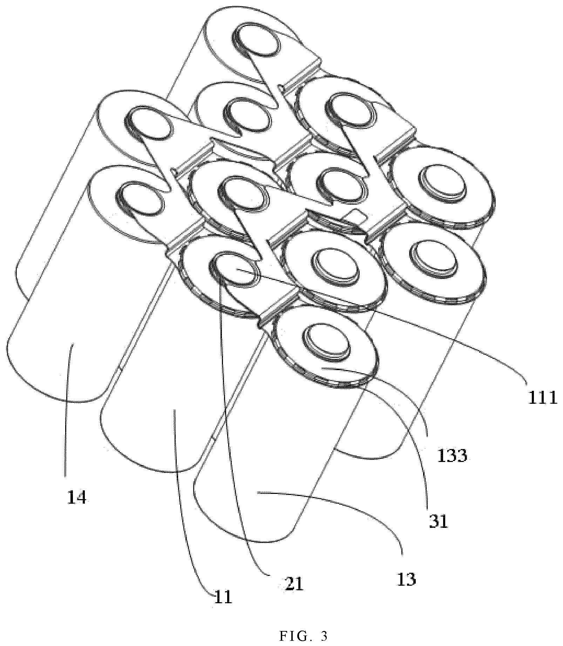

In the embodiments of the present disclosure, the connecting units are configured to connect the battery cells 100. There are a plurality of battery cells 100, and each battery cell 100 has a positive terminal and a negative terminal. To facilitate differentiation, in the embodiments of the present disclosure, as illustrated in FIG. 3, FIG. 3 shows part of a structure in FIG. 1, the plurality of battery cells specifically include first battery cells 11 and second battery cells 13. Each of the first battery cells 11 and the second battery cells 13 includes the positive terminal and the negative terminal. The connecting unit is configured to connect the first battery cell 11 and the second battery cell 13 in series. Specifically, the connecting unit includes the first positive connecting part 21 and the first negative connecting part 31. The first positive connecting part 21 is configured to be sleeved on the positive terminal 111 of the first battery cell 11, and is electrically connected to the positive terminal 111 of the first battery cell 11. The first negative connecting part 31 is configured to be sleeved on the negative terminal 133 of the second battery cell 13, and is electrically connected to the negative terminal 133 of the second battery cell 13. The first negative connecting part 31 is connected to the first positive connecting part 21 to connect the first battery cell 11 and the second battery cell 13 in series.

In the embodiments of the present disclosure, by sleeving the first positive connecting part 21 on the first positive terminal 111 of the first battery cell 11 and sleeving the first negative connecting part 31 on the first negative terminal 133 of the second battery cell 13, a series connection of the first battery cell 11 and the second battery cell 13 is realized. Compared with related arts, in which the busbar and the pole of the battery cell are welded, in embodiments of the present disclosure, the connecting process is simplified, and production efficiency and yield are improved. it can not only reduce investment in welding equipment, welding debugging, verification of human, and material resources to rapidly improve the production efficiency of the battery module (it takes about 10 seconds to weld one battery cell, the battery module includes 750 battery cells one on average, and the battery module takes about 125 minutes to weld), but also make the battery module being greatly reduced in terms of production equipment, production costs, welding tooling, process research and development costs, and human resources, achieving effects of low-costs and rapid production of the battery module.

Optionally, a material of the connecting unit may be copper or aluminum, and the material is selected according to actual needs. The following uses copper as an example.

According to the principle of thermal balance, when a temperature of the busbar increases, a temperature difference between the busbar and a surrounding environment gradually becomes larger, making a heat dissipation speed faster. A final heat dissipation speed is equal to a heat generation speed, and a temperature of the copper busbar remains stable, that is, a thermal balance state is maintained.

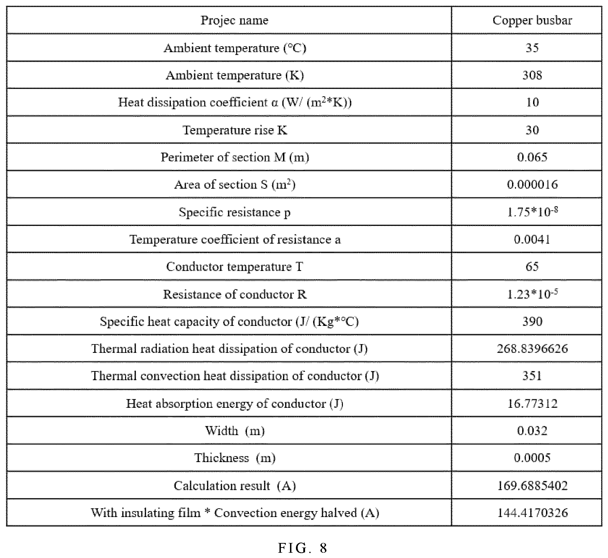

In the embodiments of the present disclosure, a surface area of the connecting unit satisfies the following formula 1. For specific calculation data, please refer to FIG. 8.

$$\int_0^t K S_{surface}\, \varDelta T(t) d(t) + Cm \varDelta T(t) = I^2 RT + J_{\text{resistance loss}}, \text{ (Formula 1)}.$$

Where $\int_0^t K S_{surface}\, \varDelta T(t) d(t)$ represents total heat dissipation energy, $Cm\varDelta T(t)$ represents heat absorption energy of conductor, $I^2RT$ represents joule heat energy generated by electric current, and $J_{\text{resistance loss}}$ represents resistance loss.

Taking into account that the $J_{\text{resistance loss}}$ is much less than the joule heat energy generated by electric current $I^2RT$, the $J_{\text{resistance loss}}$ can be omitted during a calculation process. Therefore, the formula 1 may be simplified to a formula 2.

$$\int_0^t K S_{surface}\, \varDelta T(t) d(t) + Cm \varDelta T(t) = I^2 RT, \text{ (Formula 2)}.$$

A meaning of the above formula 2 is total heat dissipation energy + heat absorption energy of conductor = joule heat energy generated by electric current. Next, the above formula will be discussed in detail.

A first part of the formula 2 is $\int_0^t K S_{surface}\, \varDelta T(t) d(t)$.

A meaning of the first part of the formula 2 refers to the total heat dissipation energy, where $t$ represents the time from powering on to thermal equilibrium; K represents a thermal conductivity; $S_{surface}$ represents the surface area of the connecting unit; $\varDelta T(t)$ represents a temperature rise value corresponding to the time $t$ during an integration process, that is, a temperature difference between a conductor temperature and an ambient temperature during a period of 0 - $t$, and the temperature difference is a function of time; and the $t$ in $d(t)$ represents a time coordinate value with the start of power-on as a starting point of timing.

A second part of the formula 2 $Cm\varDelta T(t)$ refers to the heat absorption energy of the conductor, where C represents a specific heat capacity of the connecting unit; $m$ represents a mass of the connected unit; $\varDelta T$ represents a temperature rise; and $\varDelta T(t)$ represents the temperature rise value corresponding to the time $t$ during the integration process.

A third part of the formula 2 $I^2RT$ refers to the joule heat energy generated by electric current, where 1 represents a rated current; R represents an internal resistance of the connecting unit; and T represents the time from powering on to thermal equilibrium.

Through the above formula 2, the surface area of the connecting unit can be calculated.

Through the above formula 2, when the material of the connecting unit is determined according to actual needs, a value of the thermal conductivity K is also determined.

Next, we will deduce the first part of the above formula 2.

In some examples, the total heat dissipation energy E0 can be divided into thermal radiation heat dissipation E1 and thermal convection heat dissipation E2, that is, E0 = E1 + E2.

First, the thermal radiation heat dissipation is calculated as following:

$$E1 = C_0 * S_{surface} * (B/100)\wedge 4 * t.$$

In this formula, Co represents a radiation coefficient, and in some examples, Co may be $5.67 W(m^2 * B\wedge 4)$ or other values; $B$ represents an absolute temperature, and B=t (celsius) +273.15; and $t$ represents the time from powering on to thermal equilibrium, and $t$ can be determined based on actual conditions, in some examples $t$ may be 1800 seconds.

Secondly, the thermal convection heat dissipation is calculated as following:

$$E2 = \alpha * S_{surface} * \triangle T * t.$$

In this formula, $\alpha$ represents a heat dissipation coefficient and has the unit ($W/(m^2 * K)$). A specific value of the heat dissipation coefficient is determined according to the application conditions. Examples are as follows.

During natural cooling, the heat dissipation coefficient of a surface of the copper is 5, and the heat dissipation coefficient of a surface of the aluminum is 7.5.

During water-cooling, the heat dissipation coefficient of the surface of the copper busbar is 10, and the heat dissipation coefficient of the surface of the aluminum busbar is 25.

During air-cooling, the heat dissipation coefficient of the surface of the copper busbar is 25, and the heat dissipation coefficient of the surface of the aluminum busbar is 35.

In some implementations, the value of $\alpha$ may be 10.

$\triangle T$ represents the temperature rise; $t$ represents the time from powering on to thermal equilibrium, $t$ can be determined based on actual conditions, and in some examples, $t$ may be 1800 seconds. The following explains

$$E0 = E1 + E2.$$

$$E0 = E1 + E2$$
$$= C_0 * S_{surface} * (B/100)^4 * t + \alpha * S_{surface} * \triangle T * t$$
$$= (C_0 * (B/100)^4 / \triangle T + \alpha) * \triangle T * S_{surface} * t$$
$$= (\alpha + \alpha2) * \triangle T * surface * t$$
$$= K * S_{surface} * \triangle T * t$$

Where $K=\alpha+\alpha2$, and $\alpha2=(K/100)^4/\triangle T$. The first part of the formula 2 can be obtained by performing mathematical processing (calculus processing) on $K * S_{surface} * \triangle T * t$.

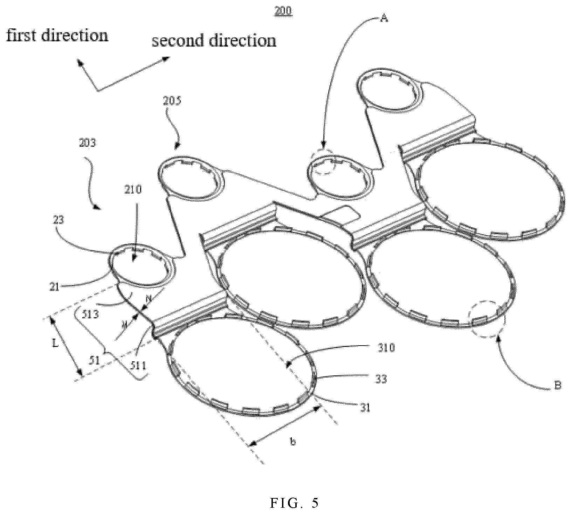

In other embodiments, other formulas may also be combined to obtain the relationship between other parameters in the connecting unit. For example, $S_{surface}$ = 2($aL + bL + ab$), where $S_{surface}$ represents the surface area of the connected unit. Please refer to FIG. 5, $L$ represents a length of the connecting unit in a current flow direction; $b$ represents a length of a first side; and $a$ represents a thickness of the connecting unit.

Through the formula 2 $\int_0^t KS_{surface} \Delta T(t)d(t) + Cm\Delta T(t) = I^2RT$, after $S_{surface}$ is calculated, the relationship between $a, b,$ and $L$ can obtained in combination with $S_{surface}$ = 2($aL + bL + ab$), facilitating technicians to optionally design a shape of the connecting unit.

Next, the formula $S_{surface}$ = 2($aL + bL + ab$) is derived by example. Referring to FIG. 5, in a second connecting unit 203, a current flow direction is from the first positive connecting part 21 to the first negative connecting part 31. The length of the second connecting unit 203 in the current flow direction is $L, b$ is the length of the first side, and $a$ is the thickness of the connecting unit. Referring to the FIG. 5, arrows M and N in FIG. 5 roughly illustrate the thickness of the connecting unit, and the surface area $S_{surface}$ of the second connecting unit 203 is

$$S_{surface} = 2(aL + bL + ab).$$

In order to make an overcurrent between the battery cells meet the demand, an appropriate overcurrent value is generally set, and in a condition that parameter values of the thermal conductivity $K$, the specific heat capacity C of the connecting unit, and the mass m of the connecting unit are available and known, the surface area $S_{surface}$ of the connecting unit can be further determined. The surface area $S_{surface}$ of the connecting unit calculated from the corresponding overcurrent value facilitates further determining the shape and size of the connecting unit. By connecting the connecting unit to at least two battery cells, the overcurrent demand may be better met and the overcurrent reliability between the battery cell and the busbar may be improved.

In some embodiments, under an action of short-term current, it can be approximately considered that the total joule heat energy generated by electric current acts on the temperature rise of the busbar. That is, a value of the total heat dissipation energy is approximately 0. At this time, the total heat dissipation energy in the formula 2 is 0. At this time, the formula 2 can also be simplified to a formula 3.

$$Cm\Delta T(t) = I^2RT, \text{(Formula 3)}.$$

Where C represents the specific heat capacity of the connecting unit; $m$ represents the mass of the connected unit; $\triangle T$ represents the temperature rise; $I$ represents the rated current; $R$ represents the internal resistance of the connecting unit; and $T$ represents the time from powering on to thermal equilibrium

Through the formula 3, we can know the specific heat capacity $C$ of the connecting unit, the mass $m$ of the connecting unit, the temperature rise $\triangle T,$ and the rated current $I$. After the time $T$ from powering on to the thermal equilibrium, the internal resistance R of the connecting unit is calculated, and optionally, the calculation of the internal resistance R can be realized by combining the formula: $R = \rho_{density}abL$.

In this formula, $\rho_{density}$ represents a density of the connecting unit. When the material of the connecting unit is determined, a value of the density can also be determined. Please refer to FIG. 5, FIG. 5 roughly illustrates *a, b,* and *L,* where *L* is the length of the connecting unit in the current flow direction, *b* is the length of the first side, and *a* is the thickness of the connecting unit. The arrows *M* and *N* in FIG. 5 are used to roughly indicate the thickness of the connecting unit, and the relationship between *a, b,* and *L* can be calculated.

As illustrated in FIG. 5, FIG. 5 is a schematic structural diagram of the busbar provided by embodiments of the present disclosure. In one embodiment, the first positive connecting part 21 is configured to be sleeved on the positive terminal 111 of the first battery cell 11. The first positive connecting part 21 includes a first surrounding part 210 configured to surround the positive terminal 111 of the first battery cell 11. The first surrounding part 210 is provided with first elastic pieces 23. The first elastic pieces 23 are arranged to interfere with the positive terminal 111 of the first battery cell 11 and are electrically connected to the positive terminal of the first battery cell 11.

The first positive connecting part 21 includes the first surrounding part 210 configured to surround the positive terminal 111 of the first battery cell 11. Since the first surrounding part 210 is configured to surround the positive terminal 111 of the first battery cell, in order to realize a stable connection between the positive terminal 111 of the first battery cell 11 and the first positive connecting part 21, the first elastic pieces 23 are provided on one side of the first surrounding part 210 facing the positive terminal 111 of the first battery cell 11 to achieve an elastic connection between the positive terminal 111 of the first battery cell and the first positive connecting part 21, so as to facilitate an installation of the positive terminal 111 of the first battery cell to the first positive connecting part 21. In order to prevent the positive terminal 111 of the first battery cell from being disconnected from the first positive connecting part 21, the positive terminal 111 of the first battery cell 11 is interference-fitted with the first elastic pieces 23. The positive terminal 111 of the first battery cell 11 is electrically connected to the first elastic pieces 23.

In the embodiments of the present disclosure, a plurality of first elastic pieces 23 may be punched out from a metal conductor. The first elastic pieces 23 are distributed in a shape imitating the pole of the battery cell. During installation, the assembly can be achieved by pressing down the positive terminal of the corresponding battery cell. As a result, the positive terminal of the first battery cell 11 is electrically connected to the first elastic pieces 23. Since the positive terminal 111 of the first battery cell 11 is interference-fitted with the first elastic pieces 23, so that the first elastic pieces 23 tightly clamp the positive terminal of the battery cell to ensure normal overcurrent and charge and discharge of the battery cell. The first elastic piece 23 is made of a conductive material, and the conductive material may specifically be copper, aluminum, etc.

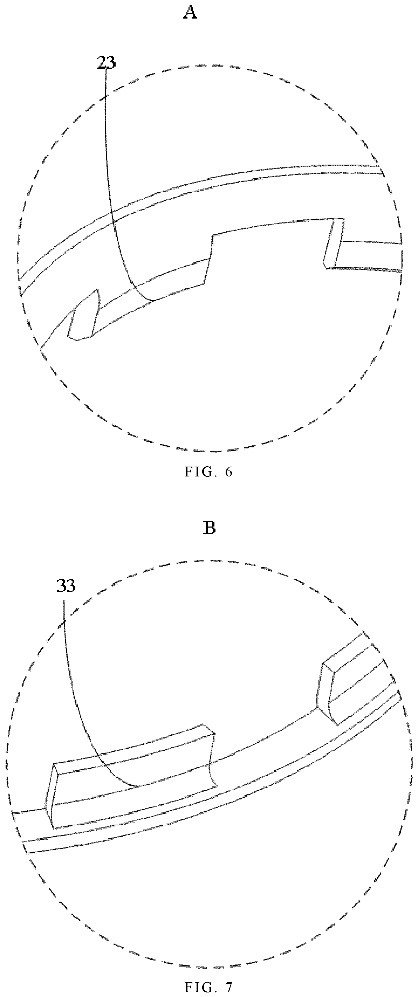

As illustrated in FIG. 6, in a specific implementation, a middle part of the first elastic piece 23 is convex inward and configured to elastically resist an outer peripheral surface of the positive terminal 111 of the first battery cell 11, and the first elastic piece 23 is in electrical contact with the positive terminal 111 of the first battery cell. Therefore, the interference fit between the positive terminal 111 of the first battery cell 11 and the first elastic piece 23 is realized, and the electrical connection between the positive terminal of the first battery cell 11 and the first elastic piece 23 is realized.

As illustrated in FIG. 5, FIG. 5 is a schematic structural diagram of a busbar provided by embodiments of the present disclosure. The first negative connecting part 31 is configured to be sleeved on the negative terminal 133 of the second battery cell 13. The first negative connecting part 31 includes a second surrounding part 310 configured to surround the negative terminal 133 of the second battery cell 13. The second surrounding part 310 is provided with second elastic pieces 33. The second elastic pieces 33 are configured to interfere with the negative terminal 133 of the second battery cell 13, and are electrically connected the negative terminal 133 of the second battery cell 13.

The first negative connecting part 31 includes the second surrounding part 310 configured to surround the negative terminal 133 of the second battery cell 13. Since the second surrounding part 310 is configured to surround the negative terminal 133 of the second battery cell 13, in order to realize a stable connection between the negative terminal 133 of the second battery cell 13 and the first negative connecting part 31, the second elastic pieces 33 are provided on one side of the second surrounding part 310 facing the negative terminal 133 of the second battery cell 13 to realize an elastic connection between the negative terminal 133 of the second battery cell and the first negative connecting part 31, so as to facilitate an installation of the negative terminal 133 of the second battery cell to the first negative connecting part 31. In order to prevent the negative terminal 133 of the second battery cell from being disconnected from the first negative connecting part 31, the negative terminal 133 of the second battery cell is interference-fitted with the second elastic pieces 33, and the negative terminal 133 of the second battery cell is electrically connected to the second elastic pieces 33. The second elastic piece 33 is made of a conductive material, and the conductive material may specifically be copper, aluminum, etc.

In the embodiments of the present disclosure, a plurality of second elastic pieces 33 may be punched out from a metal conductor. The second elastic pieces 33 are distributed in a shape imitating the pole of the battery cell. During installation, the assembly can be achieved by pressing down the negative terminal of the corresponding battery cell. As a result, the negative terminal 133 of the second battery cell 13 is electrically connected to the second elastic pieces 33. Since the negative terminal 133 of the second battery cell 13 is interference-fitted with the second elastic pieces 33, so that the second elastic pieces 33 tightly clamp the negative terminal 133 of the battery cell to ensure normal overcurrent and charge and discharge of the battery cell.

As illustrated in FIG. 7, in a specific embodiment, a middle part of the second elastic piece 33 is convex inward and configured to elastically resist an outer peripheral surface of the negative terminal 133 of the second battery cell, and the second elastic piece 33 is in electrical contact with the negative terminal 133 of the second battery cell. Therefore, the interference fit between the negative terminal 133 of the second battery cell 13 and the second elastic piece 33 is achieved.

In one embodiment, the busbar and the positive and negative terminals of the battery cell may be interference-fitted by using the elastic pieces. Optionally, As illustrated in FIG. 5, the first elastic piece 23 extends along a first extension direction, the second elastic piece extends along a second extension direction, and the first extension direction is opposite to the second extension direction.

The first elastic piece 23 extends along the first extension direction, and the second elastic piece 33 extends along the second extension direction. That is, structural directions of the first elastic piece 23 connected to the positive terminal and the second elastic piece 33 connected to the negative terminal extend in opposite directions. In this way, a stable connection between the connecting unit and the two battery cells can be achieved, and the first elastic piece and the second elastic piece can be prevented from popping out after clamping the battery cells.

In one embodiment, as illustrated in FIG. 5, the battery cell is specifically a cylindrical battery cell. The positive and negative terminals of each battery cell are disposed at a top of the battery cell. A diameter of the positive terminal is less than a diameter of the negative terminal. A diameter of the first surrounding part 210 of the first positive connecting part is adapted to the positive terminal, and a diameter of the second surrounding part 310 of the first negative connecting part is adapted to the negative terminal, enabling better installation with the positive and negative terminals of the battery cells.

As illustrated in FIG. 5, the positive terminal and the negative terminal of each battery cell are arranged in steps. The first surrounding part 210 of the first positive connecting part and of each connecting unit and the second surrounding part 310 of the same connecting unit are arranged in steps. The first surrounding part 210 of the first positive connecting part is adapted to the positive terminal of the battery cell. The second surrounding part 310 of the first negative connecting part is adapted to the negative terminal of the battery cell.

In a specific implementation, the connecting unit may specifically include a connecting part 51. The connecting part 51 includes a first end 511 and a second end 513. The first end 511 is connected to the first negative connecting part 31 by bending, and the second end 513 is connected to the first positive connecting part 21. The first negative connecting part 31 is closer to the battery cell than the first positive connecting part 21. In this way, by connecting the first end 511 to the first negative connecting part 31 by bending, by connecting the second end 513 to the first positive connecting part 21, and by arranging the first negative connecting part 31 closer to the battery cell than the first positive connecting part 21, the effect that the first surrounding part 210 and the second surrounding part 310 are arranged in steps is achieved, so that The first surrounding part 210 is adapted to the positive terminal of the battery cell, and the second surrounding part 310 is adapted to the negative terminal of the battery cell. This allows the first negative connecting part 31 to be better connected to the negative terminal of the battery cell, and the first positive connecting part 21 to be better connected to the positive terminal of the battery cell.

In a specific implementation, the connecting unit further includes insulating films (not shown in the figures). One side of the connecting part 51 facing the battery cell and one side of the connecting part 51 facing away from the battery cell are covered with the insulating films, preventing the connecting unit from causing a short circuit during the installation process and affecting electrical safety.

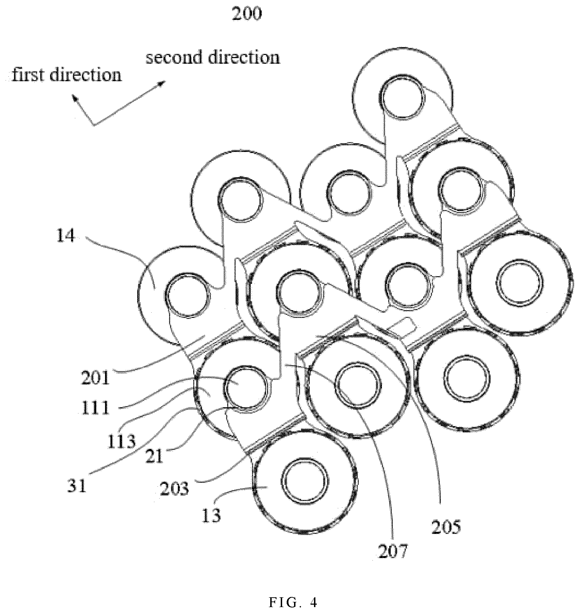

As illustrated in FIG. 3 and FIG. 4, embodiments of the present disclosure also provide a busbar 200. The busbar 200 includes a plurality of connecting units described in any of the above embodiments. The first positive connecting part 21 and the first negative connecting part 31 in each connecting unit are arranged along the first direction, and the plurality of the connecting units are arranged along the first direction. Two adjacent connecting units arranged along the first direction are defined as a first connecting unit 201 and a second connecting unit 203, respectively. The first negative connecting part of the first connecting unit 201 is sleeved on the negative terminal of the first battery cell, and the first positive connecting part 21 of the second connecting unit 203 is sleeved on the positive terminal 111 of the first battery cell 11. The first negative connecting part of the second connecting unit 203 is sleeved on the negative terminal of the second battery cell.

Since the busbar 200 includes the connecting unit as described in any of the above embodiments, the busbar 200 has the structure and function of the connecting unit as described in any of the above embodiments. The specific structure and function of the connecting unit have been stated above and will not be discussed here again.

There are multiple connecting units. For ease of understanding, two adjacent connecting units arranged along the first direction are respectively defined as the first connecting unit 201 and the second connecting unit 203. There is a preset angle between the first direction and the second direction, and the first direction and the second direction are not parallel.

The first positive connecting part 21 of the second connecting unit 203 is sleeved on the positive terminal 111 of the first battery cell 11 and is electrically connected to the positive terminal 111 of the first battery cell 11. The first negative connecting part is sleeved on the negative terminal of the second battery cell and is electrically connected to the negative terminal of the second battery cell. In this way, the positive terminal 111 of the first battery cell 11 and the negative terminal of the second battery cell are electrically connected through the second connecting unit 203, so that the first battery cell and the second battery cell are connected in series.

The first negative connecting part of the first connecting unit 201 is sleeved on the negative terminal of the first battery cell and is electrically connected to the negative terminal of the first battery cell, the first positive connecting part 21 of the second connecting unit 203 is sleeved on the positive terminal 111 of the first battery cell 11, and the positive terminal 111 of the first battery cell 11 is electrically connected to the first positive connecting part 21 of the second connecting unit 203, and the first negative connecting part of the second connecting unit 203 is sleeved on the negative terminal of the second battery cell. By analogy, the first positive connecting part of the first connecting unit 201 may be sleeved on a positive terminal of a third battery cell 14. In this way, the first battery cell 11, the second battery cell 13, and the third battery cell 14 are connected in series. Thus, multiple battery cells are connected in series along the first direction through the busbar 200. The first positive connecting part 21 and the first negative connecting part 31 in each connecting unit are arranged along the first direction, and the plurality of the connecting units are arranged along the first direction. In this way, the first battery cell 11, the second battery cell 13, and the third battery cell 14 are connected in series in the first direction.

As illustrated in FIG. 4, the busbar further includes a paralleling part 207 and includes a third connecting unit 205 arranged along the second direction with the second connecting unit 203. The paralleling part 207 is configured to electrically connect the second connecting unit 203 and the third connecting unit 205. The paralleling part 207 is configured to connect the battery cells in parallel. The paralleling part may be configured to connect the first positive connecting part 21 of the second connecting unit 203 and the first positive connecting part 21 of the third connecting unit 205, or may be configured to connect the first negative connecting part of the second connecting unit 203 and the first negative connecting part of the third connecting unit 205, or may be configured to connect the connecting part 51 of the second connecting unit 203 and the connecting part 51 of the third connecting unit 205, etc., and is configured to realize the parallel connection of the plurality of battery cells.

The busbar includes a plurality of third connecting units arranged along the second direction. There are a plurality of paralleling parts. Two adjacent third connecting units 205 are connected through one paralleling part 207. As illustrated in FIG. 5, in a specific implementation, a number of the third connecting units may be three, and the number of the paralleling parts may be three. In this way, the first connecting unit 201 is adjacent to one third connecting unit, and they are connected through one paralleling part. One side of the third connecting unit facing away from the first connecting unit 201 is connected to two other third connecting units through one paralleling part, and the other two third connecting units are connected through one paralleling part.

Embodiments of the present disclosure also provide a battery module. As illustrated in FIG. 1, FIG. 1 is a schematic structural diagram of the battery module 300 provided by embodiments of the present disclosure.

The battery module 300 includes a plurality of battery cells 100 and the busbar 200 described in any of the above embodiments. The busbar 200 is configured to connect the plurality of battery cells 100. The battery module 300 includes the busbar as described in any of the above embodiments, and thus has the structure and function of the busbar as described in any of the above embodiments. The specific structure and function of the busbar have been described above and will not be discussed here again.

The battery module 300 provided in the embodiments of the present disclosure includes battery cells 100 and the busbar 200. The battery cells 100 are configured in plurality, and the busbar 200 is configured to connect the plurality of battery cells 100. The battery module provided by the embodiments of the present disclosure includes at least two battery cells. When a number of the battery cells is two, the two battery cells may be connected in series through the busbar. When the number of battery cells is three, one battery cell may be connected in series with two other battery cells, or one cell may be connected in series with another battery cell and in parallel with the remaining one battery cell. In a specific implementation, as illustrated in FIG. 1, FIG. 1 is a schematic structural diagram of the battery module 300 provided by embodiments of the present disclosure, the battery module may include a plurality of rows of battery cells arranged along the first direction, and each row of battery cells includes a plurality of battery cells arranged along the second direction. Specifically, these battery cells are connected in series and in parallel through the busbar 200. The angle between the first direction and the second direction may be less than 180 degrees. The specific number of battery cells can be configured according to actual needs, and the present disclosure does not limit the specific number.

Specifically, the battery cell may be a cylindrical battery cell. The positive terminal and the negative terminal of the battery cell are both located at the top of the battery cell. The diameter of the positive terminal is less than the diameter of the negative terminal. The diameter of the first surrounding part 210 is adapted to the positive terminal, and the diameter of the second surrounding part 310 is adapted to the negative terminal.

The positive terminal of the battery cell and the negative terminal of the same battery cell are arranged in steps. The first surrounding part 210 and the second surrounding part 310 are arranged in steps. The first surrounding part 210 is adapted to the positive terminal of the battery cell, and the second surrounding part 310 is adapted to the negative terminal of the battery cell. A height H of the first surrounding part 210 satisfies $0 < H \leq$ a height of the positive terminal of the battery cell, so that the first surrounding part 210 can be better sleeved on the positive terminal of the battery cell.

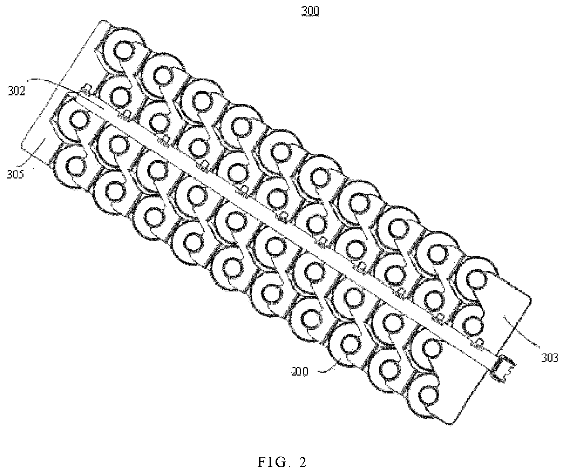

As illustrated in FIG. 2, FIG. 2 is a top view of a structure in FIG. 1. The battery module 300 further includes a positive busbar 303 and a negative busbar 305. The busbar is electrically connected to the positive busbar and the negative busbar. The positive busbar 303 is configured to connect to a positive terminal of the battery module 300, and the negative busbar 305 is configured to connect to a negative terminal of the battery module 300.

The positive busbar 303 and the negative busbar 305 are respectively located on both sides of the busbar 200 and configured to connect the positive terminal and the negative terminal of the battery module 300 respectively. The plurality of battery cells are connected in series and parallel through the busbar 200, and the positive busbar 303 and the negative busbar 305 are configured for confluence. The positive busbar 303 and the negative busbar 305 can be fixed to the battery cells 100 in the same manner as the busbar 200. For example, the positive busbar 303 is provided with a plurality of interconnected second positive connecting parts, one second positive connecting part is configured to be sleeved on the positive terminal of one battery cell; and the negative busbar is provided with a plurality of interconnected second negative connecting parts, and one second negative connecting part is configured to be sleeved on the negative terminal of one battery cell. Because the positive busbar and negative busbar are configured for confluence, their cross-sectional areas are increased, and the over-current area of an output stage can be calculated according to the over-current requirements of different systems. A proportion of the busbar covered by the insulating films ranges from 80% to 90%. For example, the proportion may be 80%, 83%, 85%, 86%, 87%, 88%, 89%, or 90%.

In a specific implementation, a total area of the busbar is 3041.627 mm$^2$, an area of the insulation films is 2555.384 mm$^2$, and the proportion of the busbar covered by the insulating films is 2555/3041=84%. At this time, it has a better insulation effect and is safer during installation.

Specifically, the positive busbar is provided with the plurality of interconnected second positive connecting parts 3031. One second positive connecting part 3031 is configured to connect the positive terminal of one battery cell. The negative busbar 305 is provided with the plurality of interconnected second negative connecting parts 3051, and one second negative connecting part 3051 is configured to connect the negative terminal of one battery cell.

Optionally, the battery module 300 further includes a flexible printed circuit (FPC) 302. The FPC 302 is arranged on upper ends of the busbar 200, the positive busbar 303, and the negative busbar 305, and is configured to collect and transmit voltage and temperature signals. During installation, the negative busbar, the busbar 200, and the positive busbar 303 are first installed, and then the FPC is installed.

After all battery modules are stacked, the battery modules are placed in a box, and glue is used to seal all components and parts in the box. The glue can seal all components and parts, such as the battery cells, the busbar 200, the positive busbar 303, the negative busbar 305, a box body, and a body cover, are bonded together to realize better structural strength. The potting of the glue can also form a secondary reinforcement for the installation of the busbar and the poles of the battery cells, completely preventing the busbar from loosening and make an entire battery system safer.

In the above embodiments, the description of each embodiment has its own emphasis. For the parts not detailed in one embodiment, refer to the related descriptions of other embodiments.

In the description of the present disclosure, the terms "first" and "second" are used for descriptive purposes only and are not to be understood as indicating or implying relative importance or as implicitly indicating the quantity of the technical features indicated. Thus, a feature defined as "first" or "second" may explicitly or implicitly include one or more features.

The above embodiments of the present disclosure provide a detailed introduction to the connecting unit, the busbar, and the battery module. In this paper, specific examples are used to explain the principle and implementation of the present disclosure. The above embodiments are only used to help understand the method of the present disclosure and its core ideas. At the same time, for those skilled in the art, according to the idea of the present disclosure, there will be changes in the specific implementation and scope of application. In summary, the content of the specification should not be understood as a restriction on the present disclosure.

## Claims

1. A connecting unit, **characterized in that** the connecting unit is configured to connect battery cells (100), the battery cells (100) comprises at least a first battery cell (11) and a second battery cell (13), and the connecting unit comprises:

   a first positive connecting part (21) configured to detachably connect a positive terminal (111) of the first battery cell (11) and electrically connected to the positive terminal (111) of the first battery cell (11); and
   a first negative connecting part (31) configured to detachably connect a negative terminal (133) of the second battery cell (13) and electrically connected to the negative terminal (133) of the second battery cell (13), wherein the first negative connecting part (31) is connected to the first positive connecting part (21) to connect the first battery cell (11) and the second battery cell (13) in series.

2. The connecting unit according to claim 1, **characterized in that** the first positive connecting part (21) is configured to clamp the positive terminal (111) of the first battery cell (11), and the first negative connecting part (31) is configured to clamp the negative terminal (133) of the second battery cell (13); and
the first positive connecting part (21) is sleeved on the positive terminal (111) of the first battery cell (11), and the first negative connecting part (31) is sleeved on the negative terminal (133) of the second battery cell (13).

3. The connecting unit according to claim 1 or claim 2, wherein a surface area of the connecting unit is acquired by:

calculating the surface area of the connecting unit according to a total heat dissipation energy, a heat absorption energy of conductor, and a joule heat energy generated by electric current; or
calculating the surface area of the connecting unit according to the heat absorption energy of conductor and the joule heat energy generated by electric current.

4. The connecting unit according to any one of claim 1 to claim 3, further comprising a connecting part, wherein the first negative connecting part (31) is connected to the first positive connecting part (21) through the connecting part (51), the connecting part (51) comprises a first end (511) and a second end (513), the first end (511) is connected to the first negative connecting part (31) by bending, and the second end (513) is connected to the first positive connecting part (21); and
the connecting part (51) is covered by an insulating film.

5. The connecting unit according to any one of claim 2 to claim 4, wherein the first positive connecting part (21) comprises a first surrounding part (210), and the first surrounding part (210) is configured to be sleeved on the positive terminal (111) of the first battery cell (11) and is electrically connected to the positive terminal (111) of the first battery cell (11); or

the first negative connecting part (31) comprises a second surrounding part (310), the second surrounding part (310) is configured to surround the negative terminal (133) of the second battery cell (13) and is electrically connected to the negative terminal (133) of the second battery cell (13); or
the first positive connecting part (21) comprises a first surrounding part (210), and the first surrounding part (210) is configured to be sleeved on the positive terminal (111) of the first battery cell (11) and is electrically connected to the positive terminal (111) of the first battery cell (11), and the first negative connecting part (31) comprises a second surrounding part (310), the second surrounding part (310) is configured to surround the negative terminal (133) of the second battery cell (13) and is electrically connected to the negative terminal (133) of the second battery cell (13).

6. The connecting unit according to any one of claim 2 to claim 4, wherein the first positive connecting part (21) comprises a first surrounding part (210), the first surrounding part (210) is configured to be sleeved on the positive terminal (111) of the first battery cell (11) and is electrically connected to the positive terminal (111) of the first battery cell (11), the first surrounding part (210) is provided with first elastic pieces (23), and the first elastic pieces (23) are configured to be interference-fitted with the positive terminal (111) of the first battery cell (11); or

the first negative connecting part (31) comprises a second surrounding part (310), the second surrounding part (310) is configured to surround the negative terminal (133) of the second battery cell (13) and is electrically connected to the negative terminal (133) of the second battery cell (13), the second surrounding part (310) is provided with second elastic pieces (33), and the second elastic pieces (33) are configured to be interference-fitted with the negative terminal (133) of the second battery cell (13); or
the first positive connecting part (21) comprises a first surrounding part (210), the first surrounding part (210) is configured to be sleeved on the positive terminal (111) of the first battery cell (11) and is electrically connected to the positive terminal (111) of the first battery cell (11), the first surrounding part (210) is provided with first elastic pieces (23), and the first elastic pieces (23) are configured to be interference-fitted with the positive terminal (111) of the first battery cell (11), the first negative connecting part (31) comprises a second surrounding part (310), the second surrounding part (310) is configured to surround the negative terminal (133) of the second battery cell (13) and is electrically connected to the negative terminal (133) of the second battery cell (13), the second surrounding part (310) is provided with second elastic pieces (33), and the second elastic pieces (33) are configured to be interference-fitted with the negative terminal (133) of the second battery cell (13).

7. The connecting unit according to any one of claim 2 to claim 4, wherein the first positive connecting part (21) comprises a first surrounding part (210), the first surrounding part (210) is configured to be sleeved on the positive terminal (111) of the first battery cell (11) and is electrically connected to the positive terminal (111) of the first battery cell (11), the first surrounding part (210) is provided with first elastic pieces (23), and the first elastic pieces (23) are configured to be interference-fitted with the positive terminal (111) of the first battery cell (11); the first negative connecting part (31) comprises a second surrounding part (310), the second surrounding part (310) is configured to surround the negative terminal (133) of the second battery cell (13) and is electrically connected to the negative terminal (133) of the second battery cell (13), the second surrounding part (310) is provided with second elastic pieces (33), and the second elastic pieces (33) are configured to be interference-fitted with the negative terminal (133) of the second battery cell (13); and the first elastic piece (23) extend along a first extension direction, the second elastic piece (33) extend along a second extension direction, and the first extension direction is opposite to the second extension direction.

8. A busbar (200), comprising a plurality of connecting units of any one of claim 1 to claim 7, wherein the first positive connecting part (21) and the first negative connecting part (31) of each of the connecting units are arranged in a first direction, and the plurality of connecting units are arranged along the first direction; two adjacent ones of the connecting units arranged along the first direction are defined as a first connecting unit (201) and a second connecting unit (203), respectively, a first negative connecting part (31) of the first connecting unit (201) is sleeved on the negative terminal of the first battery cell (11), a first positive connecting part (21) of the second connecting unit (203) is sleeved on the positive terminal (111) of the first battery cell (11), and a first negative connecting part (31) of the second connecting unit (203) is sleeved on the negative terminal (133) of the second battery cell (13).

9. The busbar (200) according to claim 8, further comprising paralleling parts (207) and comprising third connecting units (205) arranged along a second direction, wherein each of the paralleling parts (207) is configured to electrically connect the first connecting unit (201) and one of the third connecting units (205), or is configured to electrically connect the second connecting unit (203) and one of the third connecting units (205).

10. A battery module (300), comprising:

   a plurality of battery cells (100); and
   the busbar (200) of claim 8 or claim 9 and configured to connect the plurality of battery cells (100).

11. The battery module (300) according to claim 10, further comprising a positive busbar (303) and a negative busbar (305), wherein the busbar is electrically connected to the positive busbar (303) and the negative busbar (305), the positive busbar (303) is configured to connect to a positive terminal of the battery module (300), and the negative busbar (305) is configured to connect to a negative terminal of the battery module (300); and
   the positive busbar (303) is provided with a plurality of interconnected second positive connecting parts (3031), and each of the second positive connecting parts (3031) is configured to clamp a positive terminal of one of the battery cells; and the negative busbar (305) is provided with a plurality of interconnected second negative connecting parts (3051), and each of the second negative connecting part (3051) is configured to clamp a negative terminal of one of the battery cells.

12. The battery module (300) according to claim 10 or claim 11, wherein the battery cells (100) are cylindrical battery cells, a positive terminal and a negative terminal of each of the battery cells (100) are disposed at a top of the battery cell (100), a diameter of the positive terminal is less than a diameter of the negative terminal, a diameter of the first positive connecting part (21) is adapted to the positive terminal, and a diameter of the first negative connecting part (31) is adapted to the negative terminal; and
   the positive terminal and the negative terminal of each of the battery cells (100) are arranged in steps, the first positive connecting part (21) and the first negative connecting part (31) of each of the connecting units are arranged in steps, the first positive connecting part (21) is adapted to the positive terminal, and the first negative connecting part (31) is adapted to the negative terminal.

13. The battery module (300) according to any one of claim 10 to claim 12, wherein the first positive connecting part (21) comprises a first surrounding part (210), the first surrounding part (210) is electrically connected to the positive terminal (111) of the first battery cell (11), and a height H of the first surrounding part (210) satisfies 0 < H < a height of the positive terminal of the battery cell.

14. The battery module (300) according to claim 11, further comprising a a flexible printed circuit (FPC), wherein the FPC (302) is arranged on upper ends of the busbar (200), the positive busbar (303), and the negative busbar (305).

15. The battery module (300) according to any one of claim 10 to claim 14, wherein the busbar (200) is covered by an insulating film, a proportion of the busbar covered by the insulating film ranges from 80% to 90%.

FIG. 1

FIG. 2

FIG. 3

FIG. 4

first direction

second direction

FIG. 5

A

23

FIG. 6

B

33

FIG. 7

| Projec name | Copper busbar |
|---|---|
| Ambient temperature (°C) | 35 |
| Ambient temperature (K) | 308 |
| Heat dissipation coefficient α (W/ (m$^2$*K)) | 10 |
| Temperature rise K | 30 |
| Perimeter of section M (m) | 0.065 |
| Area of section S (m$^2$) | 0.000016 |
| Specific resistance p | $1.75*10^{-8}$ |
| Temperature coefficient of resistance a | 0.0041 |
| Conductor temperature T | 65 |
| Resistance of conductor R | $1.23*10^{-5}$ |
| Specific heat capacity of conductor (J/ (Kg*°C) | 390 |
| Thermal radiation heat dissipation of conductor (J) | 268.8396626 |
| Thermal convection heat dissipation of conductor (J) | 351 |
| Heat absorption energy of conductor (J) | 16.77312 |
| Width (m) | 0.032 |
| Thickness (m) | 0.0005 |
| Calculation result (A) | 169.6885402 |
| With insulating film * Convection energy halved (A) | 144.4170326 |

FIG. 8

Europäisches
Patentamt

European
Patent Office

Office européen
des brevets

# EUROPEAN SEARCH REPORT

**Application Number**

EP 24 21 8538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 5 591948 B2 (YKK CORP [JP]HASEGAWA KENJI [JP]OKADA TOMOYUKI [JP]) 17 September 2014 (2014-09-17) * figures 4,6,8 * | 1-6,8, 10,12,13 | INV. H01M50/509 H01M50/545 H01M50/559 |
| X | WO 2011/111721 A1 (CAPTEX CO LTD [JP]; ITOH SYUICHI [JP]) 15 September 2011 (2011-09-15) * figures 15,16,19,22 * | 1-3,5,6, 8-13 | |
| X | US 2021/399386 A1 (FALTERMEIER PETER [DE] ET AL) 23 December 2021 (2021-12-23) * figures 1,4,5,8 * | 1,4-6, 8-10,12 | |
| X | WO 2015/066078 A1 (JOHNSON CONTROLS ADVANCED POWER SOLUTIONS LLC [US]) 7 May 2015 (2015-05-07) * paragraph [0082]; figures 15,16,31 * | 1,2,5-8, 10,12,13 | |
| E | WO 2024/255926 A1 (EVE ENERGY CO LTD [CN]) 19 December 2024 (2024-12-19) * figures 3,4 * | 1-6,8-15 | |

**TECHNICAL FIELDS SEARCHED (IPC)**

H01M

The present search report has been drawn up for all claims

| Place of search | Date of completion of the search | Examiner |
|---|---|---|
| Munich | 12 May 2025 | Guénon, Sylvain |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

  .......................................................................

& : member of the same patent family, corresponding
    document

EPO FORM 1503 03.82 (P04C01)

1

EP 4 579 925 A1

## ANNEX TO THE EUROPEAN SEARCH REPORT
## ON EUROPEAN PATENT APPLICATION NO.

EP 24 21 8538

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2025

| Patent document cited in search report | | Publication date | Patent family member(s) | | Publication date |
|---|---|---|---|---|---|
| JP 5591948 | B2 | 17-09-2014 | JP 5591948 B2 | | 17-09-2014 |
| | | | JP WO2012073332 A1 | | 19-05-2014 |
| | | | WO 2012073332 A1 | | 07-06-2012 |
| WO 2011111721 | A1 | 15-09-2011 | NONE | | |
| US 2021399386 | A1 | 23-12-2021 | CN 112889175 A | | 01-06-2021 |
| | | | EP 3878024 A1 | | 15-09-2021 |
| | | | US 2021399386 A1 | | 23-12-2021 |
| | | | WO 2020094218 A1 | | 14-05-2020 |
| WO 2015066078 | A1 | 07-05-2015 | NONE | | |
| WO 2024255926 | A1 | 19-12-2024 | CN 221530502 U | | 13-08-2024 |
| | | | EP 4546524 A1 | | 30-04-2025 |
| | | | US 2025141057 A1 | | 01-05-2025 |
| | | | WO 2024255926 A1 | | 19-12-2024 |

EPO FORM P0459

For more details about this annex : see Official Journal of the European Patent Office, No. 12/82